# EUROPÄISCHE PATENTANMELDUNG

(11) **EP 1 182 541 A2**
(43) Veröffentlichungstag der Anmeldung: **27.02.2002**
(21) Anmeldenummer: 01120090.4
(22) Anmeldetag: 21.08.2001
(51) Int. Cl.: G06F 3/00

(54) **System und Verfahren zum kombinierten Einsatz verschiedener Display-/Gerätetypen mit systemgesteuerter kontextabhängiger Informationsdarstellung**

(30) Priorität: 22.08.2000 DE 10041103; 02.04.2001 DE 10116331
(71) Anmelder: SIEMENS AKTIENGESELLSCHAFT, 80333 München (DE)
(72) Erfinder: Jahn, Dirk, 52072 Aachen (DE); Kiesel, Bruno, 91058 Erlangen (DE); Wohlgemuth, Wolfgang, 91058 Erlangen (DE)

(57) **Zusammenfassung**

Die Erfindung betrifft ein System und ein Verfahren zum kombinierten Einsatz verschiedener Display-/Gerätetypen (1..10) mit systemgesteuerter kontextabhängiger Informationsdarstellung mit einer mobilen Datenverarbeitungsvorrichtung (12) und mit einer Vielzahl parallel an der mobilen Datenverarbeitungsvorrichtung (12) betriebenen Interaktionsgeräten (1..10) für Anzeige und/oder Eingabe und mit einem übergeordneten System zur Kontrolle der Interaktionsgeräte (1..10) in der Weise, dass in Abhängigkeit der Eingangsparameter mindestens ein jeweils geeignetes Ausgabemedium (1..10) ausgewählt wird.

## Beschreibung

Die Erfindung betrifft ein System und Verfahren zum kombinierten Einsatz verschiedener Display-/Gerätetypen mit systemgesteuerter kontextabhängiger Informationsdarstellung.

Ein derartiges System und Verfahren kommt beispielsweise im Bereich der Automatisierungstechnik, bei Produktions- und Werkzeugmaschinen, in der Prozessautomation, bei Diagnose-/Serviceunterstützungssystemen sowie für komplexe Komponenten, Geräte und Systeme, wie beispielsweise Fahrzeuge und industrielle Maschinen und Anlagen zum Einsatz. Eine besonders vorteilhafte Anwendung besteht im Zusammenhang mit Augmented Reality (AR ="erweiterte Realität"), einer neuen Form der Mensch-Technik-Interaktion, bei der dem Anwender Informationen in sein Sichtfeld eingeblendet werden - beispielweise über eine Datenbrille. Die Einblendung geschieht jedoch kontextabhängig, d. h. passend und abgeleitet vom betrachteten Objekt, z. B. einem Bauteil. So wird das reale Sichtfeld beispielweise eines Monteurs durch eingeblendete Montagehinweise um für ihn wichtige Informationen erweitert. In diesem Falle kann Augmented Reality unter anderem das herkömmliche Montagehandbuch ersetzen. Der hier vorgestellte Lösungsansatz bezieht sich auf den Einsatz von Augmented Reality (AR) in der Montage sowie im Bereich Service und Wartung.

Der Erfindung liegt die Aufgabe zugrunde, ein System sowie ein Verfahren anzugeben, das eine situations- und nutzergerechte Informationsbereitstellung ermöglicht.

Diese Aufgabe wird gelöst durch ein System zur Strukturierung, Bereitstellung und Ausgabe von Informationen, wobei das System mehrere Interaktionsgeräte zur Ausgabe der Informationen an einen Anwender und zur Erfassung von Eingaben des Anwenders und eine am Körper des Anwenders tragbare Rechnereinheit mit einem Interaktionskontrollsystem zur Steuerung und Kopplung der Interaktionsgeräte, zur Auswertung eines durch Eingangsparameter bestimmten Kontextes einer spezifischen Arbeitssituation des Anwenders, zur Ermittlung der Interaktionsgeräte und zur Auswahl der auszugebenden Informationen jeweils in Abhängigkeit des bestimmten Kontextes enthält.

Diese Aufgabe wird gelöst durch ein Verfahren zur Strukturierung, Bereitstellung und Ausgabe von Informationen, bei dem mittels mehrerer Interaktionsgeräte Informationen an einen Anwender ausgegeben und Eingaben des Anwenders erfasst werden und mit einem Interaktionskontrollsystem in einer am Körper des Anwenders tragbaren Rechnereinheit die Interaktionsgeräte gesteuert und gekoppelt werden, ein durch Eingangsparameter bestimmter Kontext einer spezifischen Arbeitssituation des Anwenders ausgewertet wird, die Interaktionsgeräte ermittelt werden und die auszugebenden Informationen jeweils in Abhängigkeit des bestimmten Kontextes ausgewählt werden.

Vorteilhaft wird das System so ausgestaltet, dass das Interaktionskontrollsystem Auswertemittel zur Priorisierung eines oder mehrerer Interaktionsgeräte enthält und dass die Interaktionsgeräte Ausgabemittel zur Ausgabe eines Ergebnisses der Priorisierung an den Anwender enthalten. Der Anwender kann anhand des ausgegebenen Ergebnisses leichter entscheiden, welches Interaktionsmittel er sinnvollerweise verwenden sollte. Durch die Vielzahl der verwendeten Interaktionsmittel wird insbesondere ermöglicht, dass die Informationen als statische und dynamische Informationen ausgebildet sind. Abhängig von der Art der Information wird vom Interaktionskontrollsystem das für die Informationswiedergabe am besten geeignete Interaktionsmittel vorgeschlagen bzw. ausgewählt. Vorteilhaft ist das Interaktionskontrollsystem zur Aktivierung und Deaktivierung der Interaktionsgeräte in Abhängigkeit von Eingaben des Anwenders vorgesehen, so dass nur die wirklich gewünschten Interaktionsgerät parallel im Einsatz sind. Im Umfeld der Augmented Reality als Interaktionsgerät besonders geeignet ist ein Head-Mounted Display mit Mitteln zur Erfassung von Eingaben des Anwenders, z. B. ein Mikrofon oder Tasten.

Im Folgenden wird die Erfindung anhand der in den Figuren dargestellten Ausführungsbeispiele näher beschrieben und erläutert.

### Es zeigen:

- FIG 1: eine Übersicht über die wesentlichen Systemkomponenten einer kooperativen augmentierten Arbeitsumgebung,
- FIG 2: mögliche Typen von Ein-/Ausgabegeräten einer kooperativen augmentierten Arbeitsumgebung und
- FIG 3: ein Anwendungsbeispiel für den praktischen Einsatz von Augmented Reality.

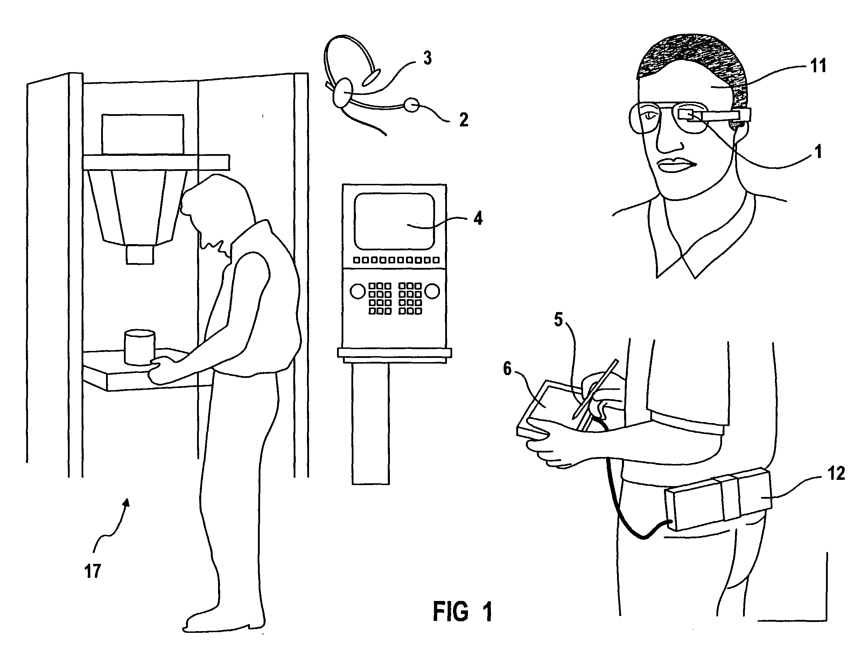

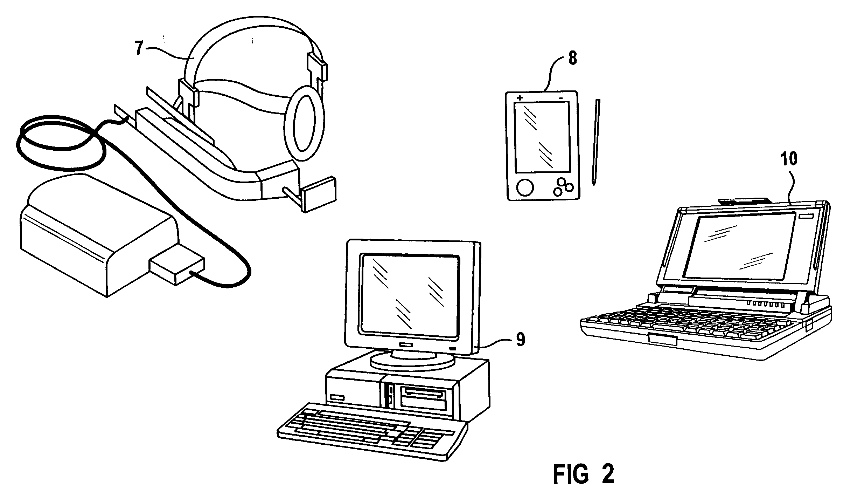

In der heutigen Informationsgesellschaft ist die Vielfalt von Informationen und Daten, deren geeignete Strukturierung und Bereitstellung mittels DV-technischer, elektronischer Medien, und schließlich deren adäquate Präsentation und Anzeige für den Nutzer eine Problemstellung in vielen Anwendungsbereichen. Im Hinblick auf eine situations- und nutzergerechte Informationsbereitstellung - eine solche ist für Augmented Reality-basierte Systeme charakteristisch - ist dabei von Bedeutung, welches Interaktionsgerät 1..10 dem Anwender 11 zur Verfügung steht (für visuelle oder auch akustische Information). In Figur 1 und Figur 2 finden sich verschiedene Arten solcher Interaktionsgeräte 1..10.

Insbesondere in Arbeitssituationen/-umgebungen, wo Informationen 14 unterschiedlichen Umfangs - von einfachen Texten bis hin zu detaillierten Grafiken - eine Rolle spielen, ist dies eine Herausforderung für die Systemgestaltung: Welches Gerät 1..10 wird dem Benutzer 11 bei seiner Aufgabe mitgegeben? Dies trifft beispielsweise für einen Facharbeiter/Servicefachmann 11 bei seinen Tätigkeiten wie Fehlerdiagnose, Inbetriebnahme, Wartung oder Instandsetzung von Maschinen/Anlagen zu: Bei den von ihm benötigten Informationen aus Montagehandbüchern, Anlagendokumentationen oder auch dynamisch ermittelten Prozesswerten handelt es sich u. a. um Texte, einfache Variablen-/Wertdarstellungen oder auch um Konstruktionszeichnungen wie Elektro- oder Mechanik-CAD-Pläne bis hin zu Videosequenzen beispielsweise als Instruktionsanleitungen. Prinzipiell ergeben sich aus den unterschiedlichen Informationstypen auch unterschiedliche Anforderungskategorien für die Darstellungseigenschaften des verwendeten Interaktionsgerätes 1..10.

Bisherige Lösungen sehen in der Regel die Verwendung eines Typs von Interaktionsgerät 1..10 vor. Bestenfalls werden unterschiedliche, unabhängig operierende Interaktionsgeräte 1..10 verwendet. Der Benutzer 11 sucht sich auf unabhängig funktionierenden Systemen die gerade benötigte Information 14. Eine situationsgerechte, koordinierte Ausgabe auf unterschiedlichen, zugleich angeschlossenen Anzeigegeräten 1..10 im Verfügungsbereich des Benutzers 11 wird bislang nicht unterstützt.

Bei der hier vorgeschlagenen Lösung wird dem Benutzer 11 ein mobiler, möglichst am Körper tragbarer Computer 12 zur Verfügung gestellt, der sich dadurch auszeichnet, dass mehrere Interaktionsgeräte 1..10 als Anzeige- und/oder Eingabemittel parallel an diesem Computer 12 betrieben werden oder mit diesem Computer 12 drahtlos gekoppelt sind. Ein übergeordnetes System (hier genannt: Interaktionskontrollsystem für "Kooperatives Augmented Environment") nimmt die Kontrolle über die Interaktionsgeräte 1..10 wahr: Es wertet den durch verschiedene Eingangsparameter bestimmten Kontext der spezifischen Arbeitssituation 17 aus (Ort, Zeit, Arbeitsprozess, Anlagenzustand - d. h. Prozessdaten - , aktueller Benutzerfokus, etc.) und entscheidet über das für den Benutzer jeweils geeignete Ausgabemedium 1..10: Sprachausgabe, Einfachausgabe auf Head-Mounted Display bzw. Datenbrille, Detailanzeigen z. B. auf einem Handheld-artigen Gerät; Anlagenübersicht und Anlagensteuerung auf stationärem Monitor. Das Gesamtsystem sieht dabei speziell auch den kombinierten Einsatz verschiedener solcher Anzeigegeräte 1..10 vor. Dabei wird der Benutzer 11 gegebenenfalls wechselseitig mittels den Anzeigemöglichkeiten der Geräte 1..10 darüber informiert, wenn auf jeweils einem weiteren Gerät 1..10 signifikante Information zur Einsicht ansteht. Der Vorteil ist die, im Hinblick auf die darzustellende Information 14, benutzergerechte Auswahl der Interaktionsgeräte 1..10 auch im Kontext der gegebenen Arbeitssituation 17. Der Benutzer 11 kann die Menge der ihm zur Verfügung stehenden Geräte 1..10 verändern, d. h. auch einschränken oder erweitern und dieses dem Interaktionskontrollsystem bekannt machen. Als Besonderheiten sind die folgenden Punkte zu nennen: Es erfolgt eine Auswertung von Kontextinformation (Ort, Zeit, Arbeitsprozess, Anlagenzustand-d. h. Prozessdaten- , aktueller Benutzerfokus, etc.) zur situations- und nutzergerechten Auswahl und Koordination von Interaktionsgeräten 1..10, speziell Anzeigegeräten. Es ist ein mobiler Computer 12 vorgesehen, am Körper getragen, mit der Anschlussmöglichkeit mehrerer verschiedenartiger Displays 1..10 und gegebenenfalls mit drahtloser Anbindung zu weiteren externen, mobilen oder stationären Geräten 1..10, die zur Informationspräsentation einbezogen werden.

Ein mögliches Szenario eines Ausführungsbeispiels sieht folgendermaßen aus:
Der Servicetechniker 11 betritt eine automatisierungstechnisch gesteuerte Anlage, in der er Wartungs- oder Reparaturarbeiten durchführen soll. Der Servicetechniker 11 ist ausgestattet mit einem am Körper tragbaren Computer 12 (Wearable Computer am Gürtel), im Folgenden Service-Computer genannt. An diesem Service-Computer 12 ist ein sogenanntes Head-wornoder Head-mounted-Display (HMD) angeschlossen, ein Anzeigegerät 1, 7 positioniert im Blickfeld des Benutzers 11. Zudem verfügt der Computer 12 über Betriebsmittel zur akustischen Aufnahme (Mikrofon 2) und akustischen Ausgabe (Kopfhörer 3). Als weiteres Anzeigegerät ist an dem Service-Computer ein sogenanntes Flat-Panel Display 6 angeschlossen, das der Benutzer 11 in einer am Gürtel befestigten Tasche während seiner Arbeit bereithält. Über eine drahtlose Netzanbindung erfolgt ein Datenaustausch zwischen dem Service-Computer 12 und weiteren zusätzlichen stationären Rechnern. In ersterem Display 1, 7, direkt in seinem Blickfeld, erhält der Benutzer 11 lediglich einfache Instruktionen 14 zur Vorgehensweise für seine aktuelle Arbeitssituation 17. Er wird dabei in seiner Sicht und Aufmerksamkeit für die eigentliche Aufgabe nicht eingeschränkt. Zusätzlich werden ihm automatisch oder auf Abruf relevante Prozessdaten eingeblendet, die den Zustand der Anlage genauer charakterisieren. Dies geschieht über die drahtlose Netzanbindung des Service-Computers 12. In dem Moment, wo die Arbeitssituation 17 es erfordert, Detailinformation z. B. aus der Anlagendokumentation zur Anzeige zu bringen, erhält der Benutzer 11 in seinem Display 1, 7 einen Hinweis beispielsweise der Art "Aktualisierte Detailinformation auf Flat-Panel Display". Dieser Hinweis kann gegebenenfalls auch akustisch erfolgen. Der Benutzer 11 quittiert die Kenntnisnahme der neuen Information, ansonsten wird er in gegebenem Zeitabstand nochmals erinnert. Ebenso erfolgt ein Hinweis, wenn der Benutzer 11 auf relevante Information bei einem stationären Rechner 4 in seinem Arbeitsumfeld 17 aufmerksam gemacht wird.

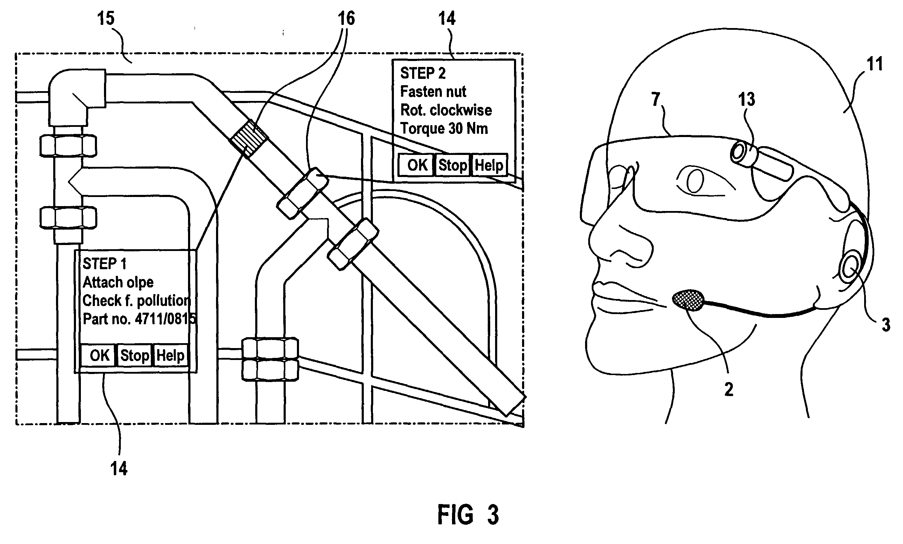

Augmented Reality (= "Erweiterte Realität") ist eine neue Form der Mensch-Technik-Interaktion (siehe Figur 3), die dem Anwender 11 beispielsweise über eine Datenbrille 7 Informationen 14 in sein Sichtfeld 15 einblendet. Die Datenbrille 7 enthält neben einer im Bereich der Brillengläser angeordneten Anzeigevorrichtung eine Bilderfassungsvorrichtung 13 in Form einer Kamera sowie ein Mikrofon 2. Der Anwender 11 kann sich mit Hilfe der Datenbrille 7 im Bereich der Anlage bewegen und Service- oder Wartungsarbeiten durchführen. Mit der geeigneten Systemunterstützung geschieht die Einblendung der Informationen 14 kontextabhängig, d. h. passend und abgeleitet vom betrachteten Objekt 16, z. B. einem Bauteil oder einer Einbauumgebung. So wird das reale Sichtfeld 16 beispielsweise eines Monteurs 11 durch eingeblendete Montagehinweise 14 um wichtige Informationen erweitert. Mit den durch die Kamera 13 erfassten Bildinformationen wird der Blickfokus des Anwenders 11 und damit das betrachtete Objekt 16 bestimmt. Im beschriebenen Fall ersetzt Augmented Reality einerseits das herkömmliche Montagehandbuch und liefert zusätzlich aktuelle prozessrelevante Informationen wie z. B. Druck, Temperatur, Drehzahl. Figur 3 skizziert die Einblendung von Information 14 (hier: zwei Arbeitsschritte) vor dem Hintergrund der Realität in der gegebenen Arbeitssituation 17 (hier: Rohrleitungsmontage).

Zusammenfassend betrifft die Erfindung ein System und ein Verfahren zum kombinierten Einsatz verschiedener Display-/Gerätetypen 1..10 mit systemgesteuerter kontextabhängiger Informationsdarstellung mit einer mobilen Datenverarbeitungsvorrichtung 12 und mit einer Vielzahl parallel an der mobilen Datenverarbeitungsvorrichtung 12 betriebenen Interaktionsgeräten 1..10 für Anzeige und/oder Eingabe und mit einem übergeordneten System zur Kontrolle der Interaktionsgeräte 1..10 in der Weise, dass in Abhängigkeit der Eingangsparameter mindestens ein jeweils geeignetes Ausgabemedium 1..10 ausgewählt wird.

## Patentansprüche

1. System zur Strukturierung, Bereitstellung und Ausgabe von Informationen (14), wobei das System mehrere Interaktionsgeräte (1..10) zur Ausgabe der Informationen (14) an einen Anwender (11) und zur Erfassung von Eingaben des Anwenders (11) und eine am Körper des Anwenders (11) tragbare Rechnereinheit (12) mit einem Interaktionskontrollsystem zur Steuerung und Kopplung der Interaktionsgeräte (1..10), zur Auswertung eines durch Eingangsparameter bestimmten Kontextes einer spezifischen Arbeitssituation (17) des Anwenders (11), zur Ermittlung der Interaktionsgeräte (1..10) und zur Auswahl der auszugebenden Informationen (14) jeweils in Abhängigkeit des bestimmten Kontextes enthält.

2. System nach Anspruch 1,
**dadurch gekennzeichnet,**
**dass** das Interaktionskontrollsystem Auswertemittel zur Priorisierung eines oder mehrerer Interaktionsgeräte (1..10) enthält und dass die Interaktionsgeräte (1..10) Ausgabemittel zur Ausgabe eines Ergebnisses der Priorisierung an den Anwender (11) enthalten.

3. System nach Anspruch 1 oder 2,
**dadurch gekennzeichnet,**
**dass** die Informationen (14) als statische und dynamische Informationen ausgebildet sind.

4. System nach einem der vorhergehenden Ansprüche,
**dadurch gekennzeichnet,**
**dass** das Interaktionskontrollsystem zur Aktivierung und Deaktivierung der Interaktionsgeräte (1..10) in Abhängigkeit von Eingaben des Anwenders (11) vorgesehen ist.

5. System nach einem der vorhergehenden Ansprüche,
**dadurch gekennzeichnet,**
**dass** mindestens ein Interaktionsgerät (7) als Head-Mounted Display mit Mitteln zur Erfassung von Eingaben des Anwenders (11) ausgebildet ist.

6. Verfahren zur Strukturierung, Bereitstellung und Ausgabe von Informationen (14), bei dem mittels mehrerer Interaktionsgeräte (1..10) Informationen (14) an einen Anwender (11) ausgegeben und Eingaben des Anwenders (11) erfasst werden und mit einem Interaktionskontrollsystem in einer am Körper des Anwenders (11) tragbaren Rechnereinheit (12) die Interaktionsgeräte gesteuert und gekoppelt werden, ein durch Eingangsparameter bestimmter Kontext einer spezifischen Arbeitssituation (17) des Anwenders (11) ausgewertet wird, die Interaktionsgeräte (1..10) ermittelt werden und die auszugebenden Informationen (14) jeweils in Abhängigkeit des bestimmten Kontextes ausgewählt werden.

7. Verfahren nach Anspruch 6,
**dadurch gekennzeichnet,**
**dass** das Interaktionskontrollsystem mittels Auswertemitteln eines oder mehrere Interaktionsgeräte (1..10) priorisiert und dass ein Ergebnis der Priorisierung mit Ausgabemitteln der Interaktionsgeräte (1..10) an den Anwender (11) ausgegeben wird.

8. Verfahren nach Anspruch 6 oder 7,
**dadurch gekennzeichnet,**
**dass** die Informationen (14) als statische und dynamische Informationen ausgebildet sind.

9. Verfahren nach einem der Ansprüche 6 bis 8,
**dadurch gekennzeichnet,**
**dass** das Interaktionskontrollsystem die Interaktionsgeräte (1..10) in Abhängigkeit von Eingaben des Anwenders (11) aktiviert und deaktiviert.

10. Verfahren nach einem der Ansprüche 6 bis 9,
**dadurch gekennzeichnet,**
**dass** mindestens ein Interaktionsgerät (7) als Head-Mounted Display mit Mitteln zur Erfassung von Eingaben des Anwenders (11) ausgebildet ist.
